# EUROPÄISCHE PATENTSCHRIFT

(11) **EP 1 800 012 B1**
(45) Veröffentlichungstag und Bekanntmachung des Hinweises auf die Patenterteilung: **16.06.2010**
(21) Anmeldenummer: 05801436.6
(22) Anmeldetag: 07.10.2005
(51) Int. Cl.: F15B 13/043, B29C 45/82, F16K 31/124

(54) **VORGESTEUERTES RÜCKSCHLAGVENTIL**
PILOTED NON-RETURN VALVE
CLAPET ANTI-RETOUR A SOUPAPE PILOTE

(30) Priorität: 15.10.2004 DE 102004050431; 21.12.2004 DE 102004061562
(43) Veröffentlichungstag der Anmeldung: 27.06.2007
(73) Patentinhaber: Bosch Rexroth AG, 70184 Stuttgart (DE)
(72) Erfinder: RAUSCH, Georg, 97816 Lohr (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2005/001801
(87) Internationale Veröffentlichungsnummer: WO 2006/042508

(56) Entgegenhaltungen:
- DE-A1- 2 538 760
- DE-A1- 19 837 960
- DE-U1- 9 218 312
- US-A- 3 862 738
- US-A- 3 954 046
- PATENT ABSTRACTS OF JAPAN Bd. 008, Nr. 267 (M-343), 7. Dezember 1984 (1984-12-07) -& JP 59 137687 A (HITACHI SEISAKUSHO KK), 7. August 1984 (1984-08-07)

## Beschreibung

Die Erfindung betrifft ein vorgesteuertes Rückschlagventil gemäß dem Oberbegriff des Patentanspruchs 1 oder 2.

Ein vorgesteuertes Rückschlagventil mit den im Oberbegriff von den Ansprüchen 1 und 2 definierten Merkmalen ist aus der DE-A-25 38 760 bekannt.

Bei einem derartigen Rückschlagventil handelt es sich im Prinzip um ein zwei Anschlüsse aufweisendes Sitzventil, das in einem Betriebszustand als Rückschlagventil wirkt und in einem anderen Betriebszustand die Druckmittelströmung in beiden Richtungen absperrt. Ein derartiges Rückschlagventil ist in der EP 0 503 188 A2 beschrieben. Dieses entsperrbare Rückschlagventil hat einen stufenförmig ausgebildeten Hauptkolben, dessen kleinere Stirnfläche und Ringfläche in Öffnungsrichtung und dessen einen Federraum begrenzende Rückfläche in Schließrichtung mit Druck beaufschlagt ist. Der eine den Hauptkolben in Schließrichtung vorspannende Feder aufnehmende Federraum ist über ein elektrisch betätigtes Vorsteuerventil mit dem den niedrigeren Druck führenden Anschluss verbindbar. Bei geschlossenem Vorsteuerventil ist das Rückschlagventil gesperrt und verhindert eine Druckmittelströmung zwischen den beiden Anschlüssen. Durch Öffnen des Vorsteuerventils kann der Federraum zu dem den niedrigeren Druck führenden Anschluss hin entlastet werden, so dass die bekannte Ventilanordnung dann als Rückschlagventil im herkömmlichen Sinne wirken kann.

Der Druckabbau im Federraum erfolgt bei der bekannten Lösung über integrierte Rückschlagventile. Es zeigte sich, dass dieses bekannte vorgesteuerte Rückschlagventil bei hochdynamischen Maschinen, bei denen das Schließen des Rückschlagventils sehr schnell erfolgen muss nicht einsetzbar ist, da der Druckabbau im Federraum zu langsam erfolgt.

Die DE 37 23 673 A1 zeigt ein vorgesteuertes Rückschlagventil, bei dem der Hauptkolben ebenfalls als Stufenkolben ausgeführt ist und das in einer Druckmittelströmungsrichtung als herkömmliches Rückschlagventil wirkt. Über die Vorsteuerung kann ein Federraum dieses Rückschlagventils druckentlastet werden, um eine Druckmittelströmung in Gegenrichtung zu ermöglichen. Bei diesem Rückschlagventil ist die Rückschlagfunktion in der "normalen" Druckmittelströmungsrichtung nicht sperrbar, des Weiteren ist der Schließvorgang auch vergleichsweise langsam, da die beim Umschalten der Vorsteuerung in Schließrichtung wirksame Ringfläche des Hauptkolbens über eine im Hauptkolbenmantel vorgesehene Düse mit Druck beaufschlagt werden muss.

Das Datenblatt RD 21 010/11.98 (Seite 35) der Anmelderin und die US 3,862,738 offenbaren jeweils Wegesitzventile mit einem als Stufenkolben ausgeführten Hauptkolben, dessen Rückfläche - im Unterschied zu Rückschlagventilen - jedoch nicht mit dem Ausgangsdruck, sondern beilspielsweise bei der US 3,862,738 mit dem Eingangsdruck oder dem Tankdruck beaufschlagt ist.

Der Erfindung liegt die Aufgabe zugrunde, ein Rückschlagventil zu schaffen, das eine Sperrung in beiden Richtungen mit vergleichsweise geringem vorrichtungstechnischem Aufwand zulässt und dass ein schnelles Schießen bei hochdynamischen Druckänderungen ermöglicht, so dass dieses Rückschlagventil auch beim hydraulischen Antrieb für eine Gießeinheit einsetzbar ist.

Diese Aufgabe wird durch ein vorgesteuertes Rückschlagventil mit den Merkmalen des Patentanspruchs 1 oder 2.

Erfindungsgemäß ist das Rückschlagventil mit zumindest zwei resultierenden Flächen ausgeführt, wobei eine in Schließrichtung wirksame resultierende Schließfläche mit dem Druck am Ausgangsanschluss und eine in Öffnungsrichtung wirksame resultierende Öffnungsfläche über eine Vorsteuerung zum Sperren des Rückschlagventils mit dem Druck am Eingangsanschluss und zum Ermöglichen der Funktion eines herkömmlichen Rückschlagventils mit einer Druckmittelsenke, beispielsweise einem Tankdruck beaufschlagbar ist.

Der wesentliche Unterschied der erfindungsgemäßen Lösung zu den herkömmlichen Lösungen besteht darin, dass die in Öffnungsrichtung wirksame resultierende Öffnungsfläche nicht direkt mit dem Druck am Eingang sondern mittelbar über die Vorsteuerung mit diesem oder dem Tankdruck beaufschlagt wird. D. h., erfindungsgemäß ist die resultierende Öffnungsfläche nicht unmittelbar hydraulisch mit dem Eingangsanschluss verbunden.

Bei der erfindungsgemäßen Ausführungsform nach Anspruch 2 ist der Hauptkolben als Stufenkolben mit einer kleineren Stirnfläche, einer rückseitigen Rückfläche und einer Ringfläche ausgebildet, wobei die Rückfläche gleich der Summe der Stirnund der Ringfläche ist. Die Stirn- und die Rückflächen sind mit dem Druck am Ausgangsanschluss und die Ringfläche über die Vorsteuerung mit dem Druck am Eingangsanschluss oder dem Druck der Druckmittelsenke beaufschlagt.

Bei der erfindungsgemäßen Lösung nach Anspruch 1 ist der Hauptkolben mit zwei Wirkflächen ausgeführt: mit einer mit dem Druck am Ausgang beaufschlagten Rückfläche sowie einer in Öffnungsrichtung wirksamen Öffnungsfläche, die über die Vorsteuerung entweder mit dem Druck am Eingangsanschluss oder mit dem Druck der Druckmittelsenke beaufschlagt ist. Bei dieser Variante sind die direkt mit dem Druck am Eingangsanschluss beaufschlagten Stirnflächenbereiche des Hauptkolbens druckausgeglichen oder gleich 0, so dass diese im Wesentlichen weder in Schließ- noch in Öffnungsrichtung wirken.

Die Vorsteuerung kann ein Schaltventil aufweisen, das in einer Schaltstellung die resultierende Öffnungsfläche mit dem Druck der Druckmittelsenke und in einer zweiten Schaltstellung mit dem Druck am Eingangsanschluss beaufschlagt.

Bei großen Nenngrößen des Rückschlagventils kann das Schaltventil seinerseits ein Logikventil der Vorsteuerung vorsteuern, so dass eine in Schließrichtung wirksame Fläche des Logikventils über das Schaltventil entweder mit dem Eingangsdruck oder mit dem Druck der Druckmittelsenke beaufschlagbar ist. Dabei ist ein Zulaufanschluss des Logikventils mit dem von der Öffnungsfläche begrenzten Raum und über eine Düse mit einem von der in Schließrichtung wirksamen Fläche des Kolbens des Logikventils begrenzten Federraum des Logikventils verbunden.

Es wird bevorzugt, einen Ringraum dieses Logikventils stets mit dem Druck der Druckmittelsenke zu beaufschlagen.

Sonstige vorteilhafte Weiterbildungen der Erfindung sind Gegenstand weiterer Unteransprüche.

Im folgenden werden bevorzugte Ausführungsbeispiele der Erfindung anhand schematischer Zeichnungen näher erläutert. Es zeigten:
Figur 1 ein erstes Ausführungsbeispiel eines vorgesteuerten, sperrbaren Rückschlagventils in einem stark vereinfachten Hydraulikschaltplan einer Druckgussmaschine ;
Figur 2 eine Variante einer Vorsteuerung des Rückschlagventils aus Figur 1 und
Figur 3 ein weiteres Ausführungsbeispiel eines sperrbaren, vorgesteuerten Rückschlagventils.

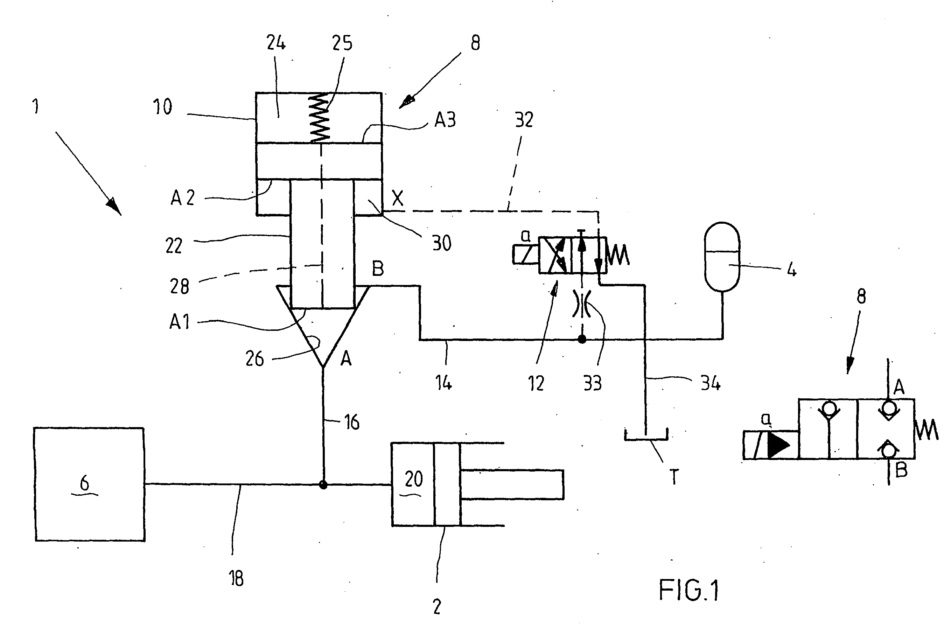

Figur 1 zeigt zunächst in stark vereinfachter Form das Grundprinzip eines hydraulischen Antriebs einer Gießeinheit 1 einer Druckgussmaschine. Ähnliche Gießoder Einspritzeinheiten werden auch bei Tixomoulding- oder Spritzgießmaschinen eingesetzt. Die Gießeinheit 1 hat einen Gießzylinder 2, über den das aufgeschmolzene oder teigige Formmaterial in eine Werkzeugkavität eingespritzt wird. Aufgrund des schnellen Erstarrungsprozesses muß dieser Einspritzvorgang (Schuß) mit hoher Geschwindigkeit erfolgen und zum vollständigen Füllen der Werkzeugkavität und zum Verdichten sowie zum Ausgleich der Materialschrumpfung sind dann in der Folge hohe Drücke aufzubringen.

Der Formfüll- oder Gießvorgang lässt sich in drei Phasen unterteilen. In einer ersten Phase wird die Schmelze in eine Gießbüchse eingebracht, in der ein vom Gießzylinder 2 angetriebener Gießkolben axial verschiebbar geführt ist. Während dieses Einfüllens der Schmelze erfolgt die Gießkolbenbewegung relativ langsam.

In der zweiten Phase, dem eigentlichen Formfüllvorgang wird die Werkzeugkavität mit hoher Fließgeschwindigkeit gefüllt - dazu muß der Gießzylinder 2 mit maximaler Geschwindigkeit ausgefahren werden.

In der dritten Phase, der Nachdruckphase wird die Werkzeugkavität dann vollständig gefüllt und der Materialschwund kompensiert. Dazu muss über den Gießzylinder 2 ein sehr hoher Druck aufgebracht werden.

Gemäß dem in Figur 1 dargestellten Schema wird der: Druck in den ersten beiden Phasen (Einfüllen der Schmelze und Einspritzen der Schmelze mit hoher Fließgeschwindigkeit in die Werkzeugkavität) von einem Niederdruckspeicher 4 aufgebracht. Beim Umschalten in die dritte Phase (Nachdruckphase) wird dann über nicht dargestellte Steuerelemente auf Hochdruck umgeschaltet, wobei dieser Hochdruck beispielsweise über einen Druckübersetzer 6 aufgebracht werden kann. Zwischen dem Niederdruckspeicher 4 und dem Gießzylinder 2 ist ein erfindungsgemäßes Rückschlagventil 8 vorgesehen, das ein Rückströmen vom Druckmittel vom Gießzylinder 2 zum Niederdruckspeicher 4 verhindern soll. Dieses Rückschlagventil 8 muss beim Umschalten auf Hochdruck sehr schnell geschlossen werden, um den Nachdruck mit der erforderlichen Geschwindigkeit aufbauen zu können.

Das Rückschlagventil 8 als vorgesteuertes Logikventil ausgeführt, wobei bei diesem Ausführungsbeispiel die Vorsteuerung mittels eines Schaltventils 12 erfolgt. Das Logikventil hat einen Eingangsanschluss B und einen Ausgangsanschluss A. Der Eingangsanschluss B ist über eine Niederdruckleitung 14 mit dem Speicher 4 verbunden. Der Ausgangsanschluss A ist über eine Verbindungsleitung 16 an eine Druckleitung 18 angeschlossen, über die der Ausgang des Druckübersetzers 6 mit einem bodenseitigen Zylinderraum 20 des Gießzylinders 2 verbunden ist.

Das Logikventil 8 hat einen als Stufenkolben ausgeführten Hauptkolben 22, der eine Stirnfläche A₁, eine Ringfläche A₂ und eine rückseitige Rückfläche A₃ aufweist. Die Fläche der Rückfläche A₃ ist gleich der Summe der beiden Flächen A₁ und A₂. Die Rückfläche A₃ begrenzt einen Federraum 24, in dem eine Feder 25 aufgenommen ist, über die der Hauptkolben 22 gegen einen Ventilsitz 26 vorgespannt ist. Im Hauptkolben 22 ist eine Verbindungsbohrung 28 vorgesehen, über die der Federraum 24 mit dem Ausgangsanschluss A verbunden ist, so dass im Federraum 24 im Wesentlichen der Ausgangsdruck anliegt.

Die Ringfläche A₂ begrenzt einen Ringraum 30, der über eine gestrichelt eingezeichnete Vorsteuerleitung 32 mit einem Anschluss A des Schaltventils 12 verbunden ist. Ein Eingangsanschluss P dieses Schaltventils ist über eine Drossel 33 in einem kurzen Leitungsabschnitt mit der Niederdruckleitung 14 verbunden. Das Schaltventil 12 hat des Weiteren einen Tankanschluss T, der über eine Tankleitung 34 in einem Tank T mündet. In einer federvorgespannten Grundposition ist der Anschluss A des Schaltventils 12 mit dem Tankanschluss T verbunden, der Eingangsanschluss P ist abgesperrt. D. h., in dieser Grundposition ist der Ringraum 30 zum Tank hin entlastet. In der Schaltposition a wird der Druckanschluss P mit dem Anschluss A verbunden, so dass Druck am Eingang B über die Niederdruckleitung 14, das Schaltventil 12, die Steuerleitung 32 im Ringraum 30 anliegt und entsprechend die Ringfläche A₂ in Öffnungsrichtung mit diesem Druck beaufschlagt ist. In Öffnungsrichtung wirkt auch der Druck am Ausgang A auf die kleine Stirnfläche A₁. Der Druck im Federraum wirkt in Schließrichtung auf die große Rückfläche A₃.

In den beiden ersten Phasen, d. h. bei der Beschleunigung der Schmelze innerhalb der nicht dargestellten Gießbüchse und beim eigentlichen Formfüllgang wird das Rückschlagventil 8 in seiner Rückschlagfunktion verwendet. Dazu wird das Schaltventil 12 in die Schaltstellung a umgeschaltet, so dass im Ringraum 30 der Eingangsdruck anliegt. Aufgrund der vorstehend beschriebenen Flächenverhältnisse kann der Hauptkolben 22 dann gegen die Kraft der vergleichsweise schwachen Feder 25 durch den Druck am Eingangsanschluss B vom Ventilsitz 26 abgehoben werden, so dass eine Druckmittelverbindung vom Niederdruckspeicher 4 zum Zylinderraum 20 des Gießzylinders 2 besteht und die beiden vorbeschriebenen Phasen (Einfüllen der Schmelze und Formfüllgang) durchfahren werden können.

Beim Umschalten auf die Nachdruckphase wird der Druckübersetzer 6 zugeschaltet, so dass der Druck in der Druckleitung 18 auf Hochdruck ansteigt (400 bar). In dieser Umsteuerphase wird auch das Schaltventil 12 in seine Grundposition zurückgeschaltet, so dass der Ringraum 30 zum Tank T hin entlastet ist. D. h., auf die Ringfläche A₂ wirkt nur noch der Tankdruck. Der sich in der Druckleitung 18 aufbauende Druck liegt über die Verbindungsbohrung 28 auch im Federraum 24 an, so dass der Hauptkolben 12 aufgrund der Flächendifferenz A₃ - A₁ äußerst schnell und mit großer Kraft in Schließrichtung beaufschlagt ist und im Millisekundenbereich schließt, so dass der Hochdruck im Zylinderraum 20 für die Nachdruckphase in wesentlich kürzerer Geschwindigkeit als bei Schaltungen aufgebaut werden kann, bei denen die eingangs beschriebenen Rückschlagventile eingesetzt werden. Das Schaltsymbol eines erfindungsgemäßen Rückschlagventils 8 mit einer Sperrstellung und einer Rückschlagfunktion ist in Figur 1 rechts eingezeichnet.

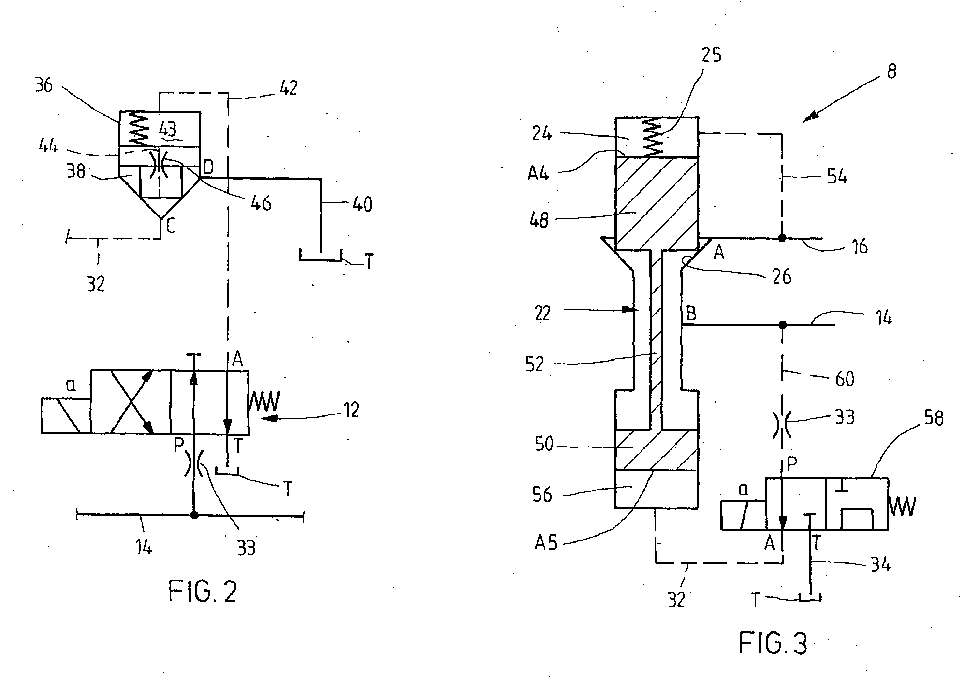

Die Schließzeit lässt sich weiter verkürzen, wenn anstelle der Vorsteuerung gemäß Figur 1 die in Figur 2 dargestellte Vorsteuerung verwendet wird, bei der das Schaltventil 12 praktisch als Vorsteuerung einer Vorsteuerlogik 36 verwendet wird.

Diese Vorsteuerlogik 36 ist mit ihrem Anschluss C an die Steuerleitung 32 angeschlossen. Die Vorsteuerlogik 36 hat einen Stufenkolben, dessen Ringfläche einen ringförmigen Raum 38 begrenzt, der über eine Leitung 40 stets mit dem Tank T verbunden ist.

Ein Federraum 43 der Vorsteuerlogik 36 ist mittels eines Leitungsabschnitts 42 an den Anschluss A des Schaltventils 12 angeschlossen. Wie beim vorbeschriebenen Ausführungsbeispiel ist der Tankanschluss T mit dem Tank T und der Anschluss P des Schaltventils 12 über die Drossel 33 und die Niederdruckleitung 14 mit dem Eingangsanschluss B des Logikventils 8 verbunden. Der Druck am Anschluss C der Vorsteuerlogik 36 wird über eine Axialbohrung 44 und eine weitere Drossel 46 in den Federraum 43 gemeldet.

Die Vorsteuerlogik 36 ist mit einer größeren Nennweite als das Schaltventil 12 ausgeführt, da über dieses beim Umschalten auf Hochdruck nur ein vergleichsweise geringer Druckmittelvolumenstrom fließen muss. Das Schaltventil gemäß Figur 2 ist daher auch kleiner als das Schaltventil gemäß Figur 1 ausgelegt. Letzteres wird beispielsweise mit einer Nenngröße 10 ausgeführt, während beim Ausführungsbeispiel gemäß Figur 2 dann eine Nenngröße 6 für das Schaltventil 12 ausreicht. Die Vorsteuerlogik 36 wird dann mit etwa einer Nenngröße 16 ausgeführt.

In der Funktion als Rückschlagventil wird das Schaltventil 12 in seine Schaltstellung a umgeschaltet, so dass der Druck am Eingang B der Hauptstufe über die Niederdruckleitung 14, das umgeschaltete Schaltventil 12, den Leitungsabschnitt 42, die Axialbohrung 44 und die Drossel 46 sowie die Steuerleitung 32 im Ringraum 30 (Figur 1) anliegt und somit den Hauptkolben 22 in Öffnungsrichtung beaufschlagt, so dass dieser wie bei einem Rückschlagventil vom Ventilsitz 26 abgehoben werden kann. Der Stufenkolben der Vorsteuerlogik 36 verbleibt dabei in seiner Schließposition.

Zum Umschalten auf Hochdruck und zum Sperren des Rückschlagventils 8 wird das Schaltventil 12 in seine federvorgespannte Grundposition zurückgefahren (siehe Figur 2), in der der Federraum 43 der Vorsteuerlogik 36 dann mit dem Tank T verbunden ist. Der Stufenkolben der Vorsteuerlogik 36 kann durch den Druck in der Steuerleitung 32 gegen die Kraft der Feder von seinem Ventilsitz abgehoben und die Verbindung zum Anschluss T und zur Leitung 40 aufgesteuert werden, so dass die Verbindung zum Tank T geöffnet und der Druck im Ringraum 30 aufgrund der großen Ventilgröße (NG 16) sehr schnell abgebaut werden kann - das Umschalten erfolgt noch schneller als beim Ausführungsbeispiel gemäß Figur 1.

Bei dem vorbeschriebenen Ausführungsbeispiel ist das als Logikventil ausgeführte Rückschlagventil 8 mit drei Wirkflächen A₁, A₂, A₃ ausgeführt, wobei die Flächen A₁ und A₂ in Öffnungsrichtung und die große Rückfläche A₃ in Schließrichtung wirken. Figur 3 zeigt ein Ausführungsbeispiel, bei dem der Hauptkolben 22 nur mit zwei Wirkflächen ausgeführt ist. Im Folgenden werden für einander entsprechende Bauelemente die gleichen Bezugszeichen wie in Figur 1 verwendet.

Bei dem in Figur 3 dargestellten Ausführungsbeispiel hat das Rückschlagventil 8 einen Hauptkolben 22, der mit zwei Kolbenbünden 48 und 50 ausgebildet ist, die über einen Kolbensteg 52 miteinander verbunden sind. Der Kolbenbund 48 ist über die Feder 25 gegen den Ventilsitz 26 vorgespannt. Diese Feder 25 ist im Federraum 24 aufgenommen, der über einen im Kolben oder extern (Figur 3) ausgebildeten Kanal 54 mit der an den Ausgangsanschluss A angeschlossenen Verbindungsleitung 16 verbunden ist. Die Niederdruckleitung 14 mündet in den vom Kolbensteg 52 durchsetzten Ringraum ein. Der in Figur 3 untere Kolbenbund 50 begrenzt einen Raum 56, der über die Steuerleitung 32 mit einem Anschluss A eines Schaltventils 58 verbunden ist. Dieses ist in der Darstellung gemäß Figur 3 in seiner Schaltposition a dargestellt. Ein Tankanschluss T des Schaltventils 58 ist wiederum über die Tankleitung 34 mit dem Tank T verbunden. Ein Anschluss P des Schaltventils 58 ist über eine Drossel 33 und einen Steuerleitungsabschnitt 60 hydraulisch an die Niederdruckleitung 14 angeschlossen. Die Durchmesser der beiden Kolbenbünde 48, 50 sind im Wesentlichen gleich ausgeführt, so dass der Hauptkolben 22 mit seinen unmittelbar vom Druck am Eingangsanschluss B beaufschlagten Stirnflächenbereichen druckausgeglichen ist. In Schließrichtung wirkt dann entsprechend nur die Stirnfläche A₄ des Kolbenbundes 48, während die Stirnfläche A₅ des unteren Kolbenbundes 50 in Öffnungsrichtung wirksam ist. Das vorbeschriebene Rückschlagventil 8 kann ebenfalls mit einer Vorsteuerung gemäß Figur 2 ausgeführt werden.

In der Funktion als Rückschlagventil wird das Schaltventil 58 in seine dargestellte Schaltposition a gebracht, so dass der Druck am Eingang B der Hauptstufe über den Steuerleitungsabschnitt 60, die Drossel 33, das Schaltventil 58 und die Steuerleitung 32 im Raum 56 anliegt. Der Druck am Ausgang A der Hauptstufe wirkt über den Verbindungskanal 54 im Federraum 24, das sperrbare Rückschlagventil 8 kann somit gegen die Kraft der schwachen Feder 25 und durch den Druck am Ausgang A durch den Druck am Eingangsanschluss B in seine Öffnungsstellung gebracht werden.

Beim Umschalten auf Hochdruck wird das Schaltventil 58 in seine federvorgespannte Grundposition zurückgeschaltet, in der dessen Anschlüsse A, T miteinander verbunden sind, so dass der Raum 56 zum Tank T hin entlastet wird und der Hauptkolben 22 durch den Druck am Ausgangsanschluss A (Hochdruck) und die Kraft der Feder 25 gegen den Ventilsitz 26 vorgespannt ist und somit leckagefrei absperrt.

Offenbart sind ein vorgesteuertes sperrbares Rückschlagventil und ein hydraulischer Antrieb einer Gießeinheit, bei der ein derartiges Rückschlagventil eingesetzt ist. Das sperrbare Rückschlagventil hat einen Hauptkolben mit einer resultierenden Öffnungsfläche und einer resultierenden Schließfläche, wobei die resultierende Öffnungsfläche über die Vorsteuerung mit dem Eingangsanschluss oder einer Druckmittelsenke verbindbar ist, so dass beim Umschalten auf den Druck der Druckmittelsenke die resultierende Öffnungsfläche druckentlastet wird.

### Bezugszeichenliste:

- 1: Gießeinheit
- 2: Gießzylinder
- 4: ND-Speicher
- 6: Druckübersetzer
- 8: Rückschlagventil
- 12: Schaltventil
- 14: Niederdruckleitung
- 16: Verbindungsleitung
- 18: Druckleitung
- 20: Zylinderraums
- 22: Hauptkolben
- 24: Federraum
- 25: Feder
- 26: Ventilsitz
- 28: Verbindungsbohrung
- 30: Ringraum
- 32: Steuerleitung
- 33: Drossel
- 34: Tankleitung
- 36: Vorsteuerlogik
- 38: ringförmiger Raum
- 40: Leitung
- 42: Leitungsabschnitt
- 43: Federraum
- 44: Axialbohrung
- 46: Drossel
- 48: Kolbenbund
- 50: Kolbenbund
- 52: Kolbensteg
- 54: Verbindungskanal
- 56: Raum
- 58: Schaltventil
- 60: Steuerleitungsabschnitt

## Patentansprüche

1. Vorgesteuertes Rückschlagventil mit einem Hauptkolben (22) mit einer vom Druck an einem Eingangsanschluss (B) beaufschlagbaren resultierenden Öffnungsfläche (A₅) und einer vom Druck an einem Ausgangsanschluss (A) beaufschlagten resultierenden Schließfläche (A₄), wobei die resultierende Öffnungsfläche (A₅) über eine Vorsteuerung (58) mit dem Eingangsanschluss (B) oder einer Druckmittelsenke (T) verbindbar ist, **dadurch gekennzeichnet, dass** der Hauptkolben (22) eine in Schließrichtung wirksame mit dem Druck am Ausgangsanschluss (A) beaufschlagte Rückfläche (A₄) hat, wobei der Hauptkolben (22) gegenüber einer direkten Beaufschlagung mit dem Druck am Eingangsanschluss (B) druckausgeglichen ist.

2. Vorgesteuertes Rückschlagventil mit einem Hauptkolben (22) mit einer vom Druck an einem Eingangsanschluss (B) beaufschlagbaren resultierenden Öffnungsfläche (A₂) in Form einer Ringfläche und einer vom Druck an einem Ausgangsanschluss (A) beaufschlagbaren resultierenden Schließfläche (A₃) in Form einer Rückfläche, wobei die resultierende Öffnungsfläche (A₂) über eine Vorsteuerung (12, 36) mit dem Eingangsanschluss (B) oder einer Druckmittelsenke (T) verbindbar ist, **dadurch gekennzeichnet, dass** der Hauptkolben (22) als Stufenkolben mit einer kleineren Stirnfläche (A₁), der rückseitigen Rückfläche (A₃) und der Ringfläche (A₂) ausgebildet ist, wobei die Fläche der Rückfläche (A₃) gleich der Summe der Flächen der Stirn- und Ringfläche (A₁ + A₂) ist, und wobei die Stirn- und Rückfläche (A₁, A₃) mit dem Druck am Ausgangsanschluss (A) und die Ringfläche (A₂) über die Vorsteuerung (12, 36) mit dem Druck am Eingangsanschluss (B) oder der Druckmittelsenke (T) beaufschlagbar sind.

3. Rückschlagventil nach Patentanspruch 1, wobei direkt mit dem Druck am Eingangsanschluss (B) beaufschlagte Stirnflächenbereiche des Hauptkolbens (22) druckausgeglichen sind.

4. Rückschlagventil nach einem der vorhergehenden Patentansprüche, wobei die Vorsteuerung ein Schaltventil (12, 58) hat, das in einer Stellung die Öffnungsfläche (A₂; A₅) mit dem Druck der Druckmittelsenke (T) und in einer zweiten Stellung mit dem Druck am Eingangsanschluss (B) beaufschlagt.

5. Rückschlagventil nach Patentanspruch 4, wobei das Schaltventil (10, 58) eine Vorsteuerlogik (36) vorsteuert, wobei über das Schaltventil (12, 58) eine in Schließrichtung wirksame Fläche der Vorsteuerlogik (36) entweder mit dem Druck der Druckmittelsenke (T) oder mit dem Druck am Eingang (B) baufschlagbar ist, wobei ein Anschluss (C) der Vorsteuerlogik (36) mit dem von der resultierenden Öffnungsfläche (A₂) begrenzten Ringraum (30) und über eine Drossel (46) mit einem von einer in Schließrichtung wirksamen Fläche der Vorsteuerlogik (36) begrenzten Federraum (43) verbunden ist.

6. Rückschlagventil nach Patentanspruch 5, wobei ein ringförmiger Raum (38) der Vorsteuerlogik (36) mit dem Druck der Druckmittelsenke (T) beaufschlagt ist.

## Claims

1. A pilot-controlled non-return valve having a main piston (22) with a resulting opening surface (A₅) pressurisable by the pressure at an input connection (B) and a resulting closing surface (A₄) pressurised by the pressure at an output connection (A), the resulting opening surface (A₅) being connectable via a pilot control (58) to the input connection (B) or to a pressure medium sink (T), **characterised in that** the main piston (22) has a rear surface (A₄) effective in the closing direction and pressurised with the pressure of the output connection (A), the main piston (22) being pressure-compensated compared with a direct pressurisation with the pressure at the input connection (B).

2. A pilot-controlled non-return valve having a main piston (22) with a resulting opening surface (A₂) in the form of an annular surface pressurisable by the pressure at an input connection (B) and a resulting closing surface (A₃) in the form of a rear surface pressurisable by the pressure at an output connection (A), the resulting opening surface (A₂) being connectable via a pilot control (12, 36) to the input connection (B) or to a pressure medium sink (T), **characterised in that** the main piston (22) is constructed as a stepped piston having a relatively small end surface (A₁), the rear-side rear surface (A₃) and the annular surface (A₂), the area of the rear surface (A₃) being equal to the sum of the areas of the end and annular surfaces (A₁ + A₂), and the end and rear surfaces (A₁, A₃) being pressurisable with the pressure at the output connection (A) and the annular surface (A₂) being pressurisable via the pilot control (12, 36) with the pressure at the input connection (B) or of the pressure medium sink (T).

3. A non-return valve according to claim 1, wherein end surface regions of the main piston (22) pressurised directly with the pressure at the input connection (B) are pressure-compensated.

4. A non-return valve according to any one of the preceding claims, wherein the pilot control has a switch-over valve (12, 58), which in one position pressurises the opening surface (A₂; A₅) with the pressure of the pressure medium sink (T) and in a second position pressurises the opening surface (A₂; A₅) with the pressure at the input connection (B).

5. A non-return valve according to claim 4, wherein the switch-over valve (12, 58) pre-controls a pilot control logic unit (36), wherein via the switch-over valve (12, 58) a surface of the pilot control logic unit (36) effective in the closing direction is pressurisable either with the pressure of the pressure medium sink (T) or with the pressure at the input (B), a connection (C) of the pilot control logic unit (36) being connected to the annular chamber (30) defined by the resulting opening surface (A₂) and via a throttle (46) to a spring chamber (43) defined by a surface of the pilot control logic unit (36) effective in the closing direction.

6. A non-return valve according to claim 5, wherein an annular chamber (38) of the pilot control logic unit (36) is pressurised with the pressure of the pressure medium sink (T).

## Revendications

1. Clapet antiretour précommandé avec un piston principal (22) avec une surface d'ouverture (A₅) résultante, pouvant être sollicitée en pression sur un raccordement d'entrée (B) et une surface de fermeture (A₄) résultante, sollicitée en pression sur un raccordement de sortie (A), la surface d'ouverture (A₅) résultante pouvant être reliée par une précommande (58) au raccordement d'entrée (B) ou à un puits de moyen de pression (T), **caractérisé en ce que** le piston principal (22) a une surface arrière (A₄) sollicitée en pression sur le raccordement de sortie (A), efficace dans le sens de fermeture, le piston principal (22) étant compensé en pression par rapport à une sollicitation directe en pression sur le raccordement d'entrée (B).

2. Clapet antiretour précommandé avec un piston principal (22) avec une surface d'ouverture (A₂) résultante, pouvant être sollicitée en pression sur un raccordement d'entrée (B) en forme de surface annulaire et une surface de fermeture (A₃) résultante, pouvant être sollicitée en pression sur un raccordement de sortie (A) en forme de surface arrière, la surface d'ouverture (A₂) résultante pouvant être reliée par une précommande (12, 36) au raccordement d'entrée (B) ou à un puits de moyen de pression (T), **caractérisé en ce que** le piston principal (22) est réalisé comme piston à gradins avec une surface avant (A₁) plus petite, la surface arrière (A₃) côté arrière et la surface annulaire (A₂), la surface de la surface arrière (A₃) étant égale à la somme des surfaces de la surface avant et de la surface annulaire (A₁+A₂), et la surface avant et la surface arrière (A₁, A₃) pouvant être sollicitées en pression sur le raccordement de sortie (A) et la surface annulaire (A₂) par la précommande (12, 36) en pression sur le raccordement d'entrée (B) ou le puits de moyen de pression (T).

3. Clapet antiretour selon la revendication 1, des zones de surface avant du piston principal (22) sollicitées directement en pression sur le raccordement d'entrée (B) étant compensées en pression.

4. Clapet antiretour selon l'une quelconque des revendications précédentes, la précommande ayant une soupape de commande (12, 58) qui sollicite dans une position la surface d'ouverture (A₂ ; A₅) en pression du puits de moyen de pression (T) et dans une seconde position en pression sur le raccordement d'entrée (B).

5. Clapet antiretour selon la revendication 4, la soupape de commande (10, 58) précommandant une logique de précommande (36), une surface efficace dans le sens de fermeture de la logique de précommande (36) pouvant être sollicitée par la soupape de commande (12, 58) en pression du puits de moyen de pression (T) ou en pression sur l'entrée (B), un raccordement (C) de la logique de précommande (36) étant relié à l'espace annulaire (30) délimité par la surface d'ouverture (A₂) résultante et par un étranglement (46) à un espace de ressort (43) délimité par une surface efficace dans le sens de fermeture de la logique de précommande (36).

6. Clapet antiretour selon la revendication 5, un espace (38) annulaire de la logique de précommande (36) étant sollicité en pression du puits de moyen de pression (T).
